# EUROPEAN PATENT APPLICATION

(11) **EP 4 300 680 A1**
(43) Date of publication of application: **03.01.2024**
(21) Application number: 22814947.2
(22) Date of filing: 29.04.2022
(51) Int. Cl.: H01M 50/209, H01M 50/244, H01M 50/291, H01M 50/503, H01M 50/507, H01M 50/543

(54) **BATTERY MODULE AND BATTERY PACK**

(30) Priority: 31.05.2021 CN 202121189263 U
(71) Applicant: BYD Company Limited, Shenzhen, Guangdong 518118 (CN)
(72) Inventor: ZHOU, Lei, Shenzhen, Guangdong 518118 (CN); HUANG, Zhixue, Shenzhen, Guangdong 518118 (CN); DAI, Xiangjun, Shenzhen, Guangdong 518118 (CN); HUANG, Zhengyi, Shenzhen, Guangdong 518118 (CN)
(74) Representative: Arnold & Siedsma
(86) International application number: PCT/CN2022/090205
(87) International publication number: WO 2022/252900

(57) **Abstract**

The present disclosure provides a battery module and a battery pack. The battery module includes: multiple cells and an outer frame. The outer frame includes: four support columns, two side plates, and two end plates. The two side plates are arranged opposite to each other. The two end plates are arranged opposite to each other. The four support columns are respectively connected between end portions of the side plates and the end plates. One of a top and a bottom of the support column is provided with a support platform and another is provided with a fitting hole. The support platform of one battery module is hittable in the fitting hole of another battery module.

## Description

### CROSS-REFERENCE TO RELATED APPLICATIONS

The present disclosure claims priority to Chinese Patent Application No. 202121189263.3, filed on May 31, 2021 and entitled "BATTERY MODULE AND BATTERY PACK", which is incorporated herein by reference in its entirety.

### FIELD

The present disclosure relates to the technical field of batteries, and more specifically, to a battery module and a battery pack.

### BACKGROUND

With the development of science and technology, it is possible to assemble multiple relatively independent battery modules into a battery pack. The number of the battery modules can be changed to adjust the battery pack, so that the battery pack can satisfy different needs of power consumption in different working environments.

In related art, the connection and fixation between multiple battery modules is complicated, which will increase the difficulty in mounting or demounting the multiple battery modules.

### SUMMARY

The present disclosure aims to solve one of the technical problems in the related art. Therefore, the present disclosure provides a battery module. The connection and fitting between multiple battery modules are stable, firm, simple and convenient.

The present disclosure further discloses a battery pack.

The battery module according to the present disclosure includes: multiple cells and an outer frame. The outer frame defines an accommodating cavity. The multiple cells are accommodated in the accommodating cavity. The outer frame includes: four support columns, two side plates, and two end plates. The two side plates are arranged opposite to each other. The two end plates are arranged opposite to each other. The four support columns are respectively connected between end portions of the side plates and the end plates. One of a top and a bottom of the support column is provided with a support platform and another is provided with a fitting hole. The support platform of one battery module is fittable in the fitting hole of another battery module.

Thereby, one of the top and the bottom of the support column is provided with the support platform and another is provided with the fitting hole, and the support platform of one battery module is fitted in the fitting hole of another battery module, so that the multiple battery modules can be stacked, connected, and fixed up and down. This can not only ensure the stability and firmness of connection and fixation between the multiple battery modules, but also facilitate mounting or demounting of the multiple battery modules.

In some examples of the present disclosure, the support platform includes: a guide fitting portion. The guide fitting portion is configured in a frustum shape.

In some examples of the present disclosure, a taper angle of the guide fitting portion is α, and α satisfies a relationship: 30°≤α≤85°.

In some examples of the present disclosure, the fitting hole is a threaded hole. A minor diameter of the threaded hole is D1, and a bottom diameter of the guide fitting portion is D2. D1 and D2 satisfies a relationship: 0.2 mm≤D1-D2≤5 mm.

In some examples of the present disclosure, the support platform further includes: a mounting portion. One end of the mounting portion is arranged at a bottom of the guide fitting portion, and another end extends away from the guide fitting portion along an axial direction. The support column is provided with a mounting hole. The mounting portion is detachably fitted in the mounting hole.

In some examples of the present disclosure, the support column includes: a column body and an insertion portion. The insertion portion is arranged on one side of the column body. An end portion of the end plate is provided with an insertion hole. The insertion portion is inserted in the insertion hole and fixedly connected to the end portion of the end plate.

In some examples of the present disclosure, another side of the column body is provided with a positioning groove, and a positioning rib is arranged on the side plate. An end portion of the positioning rib is fitted in the positioning groove and fixedly connected to the column body.

In some examples of the present disclosure, the outer frame further includes: a bottom cover, a tray, and a top cover. The bottom cover is arranged at a bottom of the multiple cells and fixedly connected to the end plates and/or the side plates. The tray is arranged at a top of the multiple cells and provided with a connection sheet for connecting the cells. The top cover is arranged at a top of the tray and fixedly connected to the end plates and/or the side plates.

The battery pack according to the present disclosure includes: a battery module described above and a power control box. The power control box is arranged on an outer side of the outer frame and detachably mounted on the outer frame.

In some examples of the present disclosure, a protruded electrode lead-out end and a protruded signal lead-out end are arranged on an outer side of the battery module. The electrode lead-out end and the signal lead-out end are spaced apart on the battery module. The power control box is provided with two via holes that are spaced apart. The electrode lead-out end and the signal lead-out end respectively penetrate through the two via holes and are electrically connected to the power control box.

The additional aspects and advantages of the present disclosure will be set forth in part in the description which follows, parts of which will become apparent from the description below, or will be understood by the practice of the present disclosure.

### BRIEF DESCRIPTION OF THE DRAWINGS

The foregoing and/or additional aspects and advantages of the present disclosure will become apparent and comprehensible in the description of the embodiments made with reference to the following accompanying drawings.
FIG. 1 is an exploded view of a battery pack according to an embodiment of the present disclosure;
FIG. 2 is an exploded view of the battery pack according to an embodiment of the present disclosure;
FIG. 3 is an exploded view of a battery module according to an embodiment of the present disclosure;
FIG. 4 is a schematic view of a power control box according to an embodiment of the present disclosure;
FIG. 5 is a schematic view of a support column according to an embodiment of the present disclosure;
FIG. 6 is a schematic view of the support column according to an embodiment of the present disclosure;
FIG. 7 is a schematic view of a support platform according to an embodiment of the present disclosure;
FIG. 8 is a schematic view of multiple battery modules stacked according to an embodiment of the present disclosure; and
FIG. 9 is a schematic view of a cabinet according to another embodiment of the present disclosure.

### Reference numerals:

1000-battery pack;
100-battery module; 101-electrode lead-out end; 102-signal lead-out end;
10-cell;
20-outer frame; 21-accommodating cavity; 22-bottom cover; 23-tray; 231-connection sheet; 24-top cover; 25-PC protection plate;
30-support column; 31-support platform; 311-guide fitting portion; 312-flange portion; 313-mounting portion; 32-fitting hole; 33-mounting hole; 34-column body; 341-positioning groove; 3411-positioning protrusion; 35-insertion portion;
40-side plate; 41-positioning rib; 411-positioning hole;
50-end plate; 51-insertion hole;
200-power control box; 201-via hole; and
300-cabinet.

### DETAILED DESCRIPTION

The embodiments of the present disclosure are described in detail below, and the embodiments described with reference to accompanying drawings are exemplary.

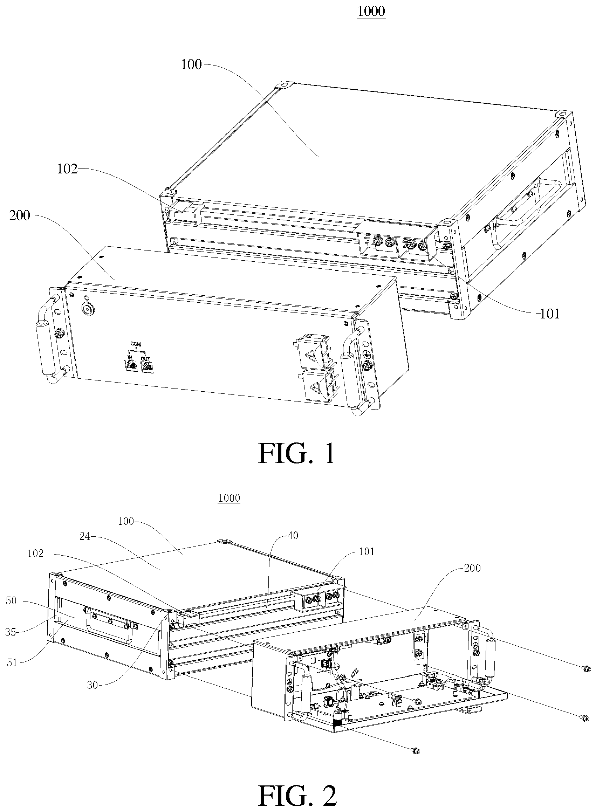

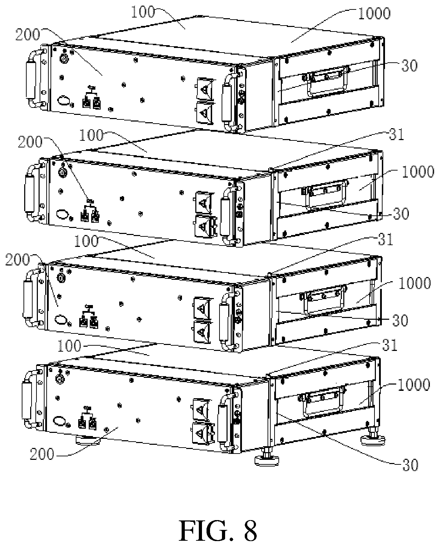

A battery module 100 according to the embodiments of the present disclosure will be described below with reference to FIG. 1 to FIG. 9.

As shown in FIG. 1 to FIG. 8, the battery module 100 according to the embodiments of the present disclosure may mainly include: multiple cells 10 and an outer frame 20. The outer frame 20 defines an accommodating cavity 21. The multiple cells 10 are accommodated in the accommodating cavity 21. The outer frame 20 may mainly include: four support columns 30, two side plates 40, and two end plates 50. The two side plates 40 are arranged opposite to each other. The two end plates 50 are arranged opposite to each other. The four support columns 30 are respectively connected between end portions of the side plates 40 and the end plates 50. Specifically, the two opposite side plates 40 and the two opposite end plates 50 are arranged. The two opposite side plates 40 and the two opposite end plates 50 form the rectangular accommodating cavity 21. The two opposite side plates 40 may serve as a length of the rectangular accommodating cavity 21, and the two opposite end plates 50 may serve as a width of the rectangular accommodating cavity 21.

In some embodiments, the four support columns 30 are further arranged. The four support columns 30 are respectively arranged on four corners of the rectangular accommodating cavity 21 formed by the two opposite side plates 40 and the two opposite end plates 50 to connect and fix the two opposite side plates 40 and the two opposite end plates 50. That is, the four support columns 30 may sequentially connect the two opposite side plates 40 and the two opposite end plates 50, so that the support columns 30, the side plates 40, and the end plates 50 may jointly define the stable and reliable accommodating cavity 21. The multiple cells 10 are arranged in the accommodating cavity 21, which can improve the stability and firmness of mounting and arrangement of the multiple cells 10 in the battery module 100.

In addition, the accommodating cavity 21 may define an overall shape of the multiple cells 10 placed in the battery module 100. The accommodating cavity 21 may limit the multiple cells 10 to some extent, which can prevent the multiple cells 10 from being arranged too loosely and avoid excessive gaps between the multiple cells 10. Thereby, the multiple cells 10 can be arranged in the battery module 100 more closely, and the reliability of the battery module 100 can be improved.

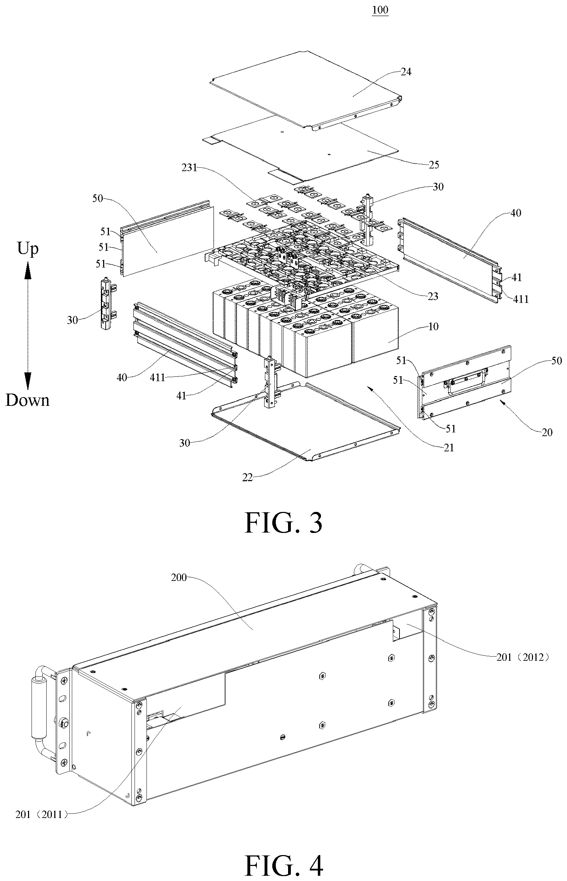

As shown in FIG. 3, FIG. 5, and FIG. 6, one of a top and a bottom of the support column 30 is provided with a support platform 31 and another is provided with a fitting hole 32. The support platform 31 of one battery module 100 is fittable in the fitting hole 32 of another battery module 100. That is, the support platform 31 of the support column 30 of one battery module 100 is extended into the fitting hole 32 of the support column 30 of another battery module 100, and the support platform 31 and the fitting hole 32 are fitted and connected with each other, so that one battery module 100 is connected and fixed with another battery module 100.

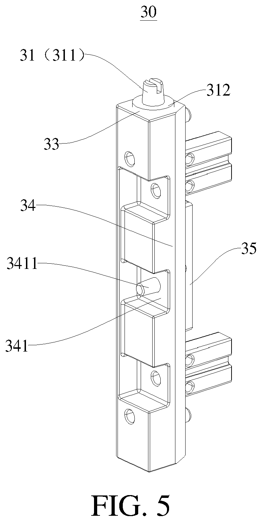

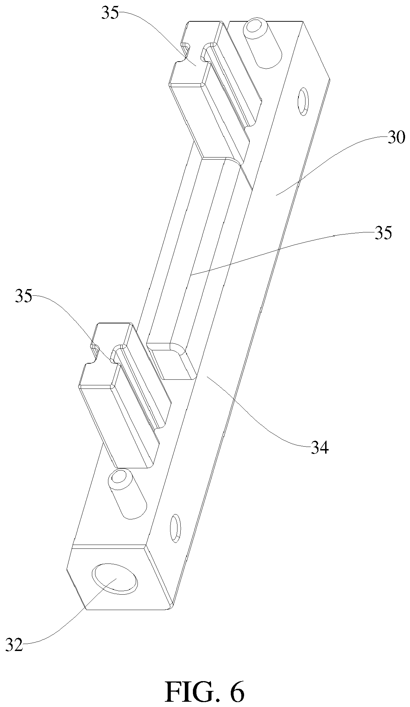

In some specific embodiments, as shown in FIG. 5 and FIG. 6, the top of the support column 30 is provided with a mounting hole 33, and the bottom is provided with the fitting hole 32. After the support columns 30 connect and fix the side plates 40 and the end plates 50, the support platform 31 may be arranged in the mounting hole 33 at the top of the support column 30, and an upper surface of the support platform 31 relative to the battery module 100 may protrude upward, so that one battery module 100 and another battery module 100 can be stacked up and down. The support platform 31 at the top of one battery module 100 is extended into the fitting hole 32 at a bottom of another battery module 100, and the support platform 31 is connected and fitted with the fitting hole 32, so that one battery module 100 and another battery module 100 are stacked up and down, which can easily and quickly realize stable and firm connection and fixation of the multiple battery modules 100.

In some other specific embodiments, the bottom of the support column 30 is provided with the mounting hole 33, and the top is provided with the fitting hole 32. After the support columns 30 connect and fix the side plates 40 and the end plates 50, the support platform 31 may be arranged in the mounting hole 33 at the bottom of the support column 30, and a lower surface of the support platform 31 relative to the battery module 100 may protrude upward, so that one battery module 100 and another battery module 100 can be stacked up and down. The support platform 31 at a bottom of one battery module 100 is extended into the fitting hole 32 at the top of another battery module 100, and the support platform 31 is connected and fitted with the fitting hole 32, so that one battery module 100 and another battery module 100 are stacked up and down, which can easily and quickly realize stable and firm connection and fixation of the multiple battery modules 100.

In some embodiments, positions of the support platform 31 and the fitting hole 32 on the support column 30 may be set selectively according to specific process needs, which can improve the applicability of the support column 30.

It should be noted that in the multiple battery modules 100 stacked up and down, the positions of the support platforms 31 on the support columns 30 need to be identical. It is not allowed that the support platforms 31 of some battery modules 100 are arranged at the top of the support columns 30 while the support platforms 31 of some other battery modules 100 are arranged at the bottom of the support columns 30. In this way, even if two battery modules 100 are connected and fixed, one of the two battery modules 100 will be upside down. That is, the upper and lower surfaces of the battery module 100 will be inverted. The original upper surface of the battery module 100 will be inverted and located at the top of another battery module 100, and face the upper surface of another battery module 100. In this case, the upside-down battery module 100 will be unable to work normally and malfunction, so that the multiple battery modules 100 connected and fixed with each other are unable to work normally.

That is, in the multiple battery modules 100 stacked up and down, the support platform 31 on each of the battery modules 100 may be arranged at the top of the support column 30, or the support platform 31 on each of the battery modules 100 may be arranged at the bottom of the support column 30. In this way, while mounting and arranging the multiple battery modules 100, without considering whether the battery module 100 is upside down or not, i.e., distinguishing between the upper and lower surfaces of the battery module 100, relative positions of two adjacent battery modules 100 can be correct when the two adjacent battery modules 100 are connected through the support platforms 31 and the fitting holes 32.

This can simplify the production process of the battery module 100 and increase the speed of mounting the battery module 100. Moreover, the support platform 31 and the fitting hole 32 of the two adjacent battery modules 100 can have a positioning effect. This can avoid distinguishing between the upper and lower surfaces of the battery module 100 by human, and prevent an installer from mistakenly distinguishing the upper and lower surfaces of the battery module 100 and mounting the two adjacent battery modules 100 upside down due to subjective factors, thereby improving the reliability of connection and fixation between the multiple battery modules 100.

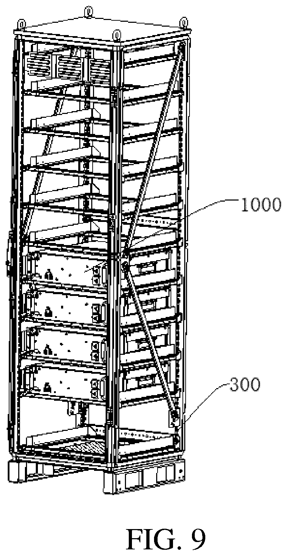

In some other embodiments of the present disclosure, as shown in FIG. 9, the multiple battery modules 100 may be arranged up and down at intervals in a cabinet 300, so that the multiple battery modules 100 are connected and fitted, and work together.

Thereby, one of the top and the bottom of the support column 30 is provided with the support platform 31 and another is provided with the fitting hole 32, and the support platform 31 of one battery module 100 is fitted in the fitting hole 32 of another battery module 100, so that the multiple battery modules 100 can be stacked, connected, and fixed up and down. This can not only ensure the stability and firmness of connection and fixation between the multiple battery modules 100, but also facilitate mounting or demounting of the multiple battery modules 100.

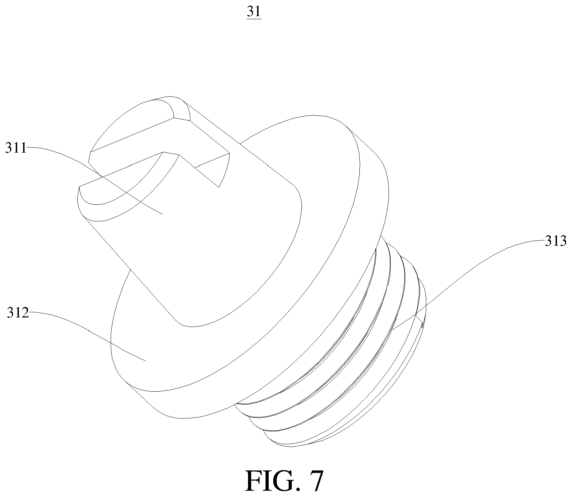

As shown in FIG. 5 and FIG. 7, the support platform 31 may mainly include: a guide fitting portion 311. The guide fitting portion 311 is configured in a frustum shape. Specifically, the support platform 31 of one battery module 100 may be fitted and connected with the fitting hole 32 of another battery module 100 through the guide fitting portion 311, so that the two battery modules 100 can be stacked up and down. The guide fitting portion 311 is configured in a frustum shape, and one end of the guide fitting portion 311 is connected and fixed with a related component on the support platform 31, so that the guide fitting portion 311 is stably mounted and arranged on the support platform 31. A diameter of the guide fitting portion 311 gradually decreases along a direction extending from one end to another end. On the one hand, this can ensure the stability and firmness of connection and fixation between one end of the guide fitting portion 311 and the related component on the support platform 31, thereby ensuring the structural reliability of the support platform 31.

On the other hand, when another end of the guide fitting portion 311 just extends into the fitting hole 32 of another battery module 100, the guide fitting portion 311 can extend into the fitting hole 32 more easily due to the smaller diameter of another end. When the guide fitting portion 311 gradually extends into the fitting hole 32, the gradually increasing diameter of the guide fitting portion 311 can have a guiding and positioning effect on the connection and fitting between the guide fitting portion 311 and the fitting hole 32, so that the guide fitting portion 311 and the fitting hole 32 can be connected and fitted more stably and reliably. It should be noted that one end of the guide fitting portion 311 may serve as a bottom of the guide fitting portion 311, and another end of the guide fitting portion 311 may serve as a top of the guide fitting portion 311.

As shown in FIG. 7, a taper angle of the guide fitting portion 311 is α, and α satisfies a relationship: 30°≤α≤85°. Specifically, setting the taper angle α of the guide fitting portion 311 between 30° and 85° can improve the stability and smoothness of connection and fitting between the guide fitting portion 311 and the fitting hole 32 on the premise that the diameter of the guide fitting portion 311 gradually decreases from one end to another end.

In some embodiments, on the premise that the diameter of the guide fitting portion 311 is not changed from one end to another end, a length of the guide fitting portion 311 may be changed by adjusting the taper angle of the guide fitting portion 311. Therefore, the taper angle α of the guide fitting portion 311 may also affect the length of the guide fitting portion 311, and the length may affect the structural stability of the guide fitting portion 311. As a result, setting the taper angle α of the guide fitting portion 311 between 30° and 85° can ensure the length of the guide fitting portion 311 to be within a reasonable range, thereby ensuring the reliability of the guide fitting portion 311. In some other embodiments, the taper α of the guide fitting portion 311 is set between 75° and 85°.

As shown in FIG. 7, the fitting hole 32 is a threaded hole. A minor diameter of the threaded hole is D1, and a bottom diameter of the guide fitting portion 311 is D2. D1 and D2 satisfies a relationship: 0.2 mm≤D1-D2≤5 mm. Specifically, by setting the minor diameter of the threaded hole to be greater than the diameter of one end of the guide fitting portion 311, the guide fitting portion 311 and the fitting hole 32 can be fitted without the need of careful alignment, which can reduce the difficulty in assembling and producing the battery module 100 and prevent the guide fitting portion 311 from contacting a thread of the threaded hole all the time during the extension of the guide fitting portion 311 into the threaded hole, causing abrasion of the thread of the threaded hole. This can improve the reliability of the battery module 100.

In addition, this can also avoid the following situation: during the extension of the guide fitting portion 311 into the threaded hole, as the diameter of the guide fitting portion 311 gradually increases, the diameter of the guide fitting portion 311 may become greater than the minor diameter of the threaded hole from a certain point, so that only a part of the guide fitting portion 311 can extend into the threaded hole and be fitted with the threaded hole, causing instability of stacking and connection of multiple battery modules 100.

In the embodiments of the present disclosure, the minor diameter of the threaded hole is D1, and the bottom diameter of the guide fitting portion 311 is D2. D1 and D2 satisfies the relationship: 0.2 mm≤D1-D2≤5 mm. Setting the minor diameter of the threaded hole to be greater than the bottom diameter of the guide fitting portion 311 within a reasonable range can avoid abrasion of the threaded hole caused by the guide fitting portion 311. Moreover, this can also avoid the following situation: on the premise that there is no need for carefully aligning the guide fitting portion 311 with the threaded hole, if the minor diameter of the threaded hole is excessively large relative to the bottom diameter of the guide fitting portion 311, there will be an excessive space for the guide fitting portion 311 to move relative to the threaded hole, and two adjacent battery modules 100 will move too much relative to each other, causing the structural instability of the battery modules 100. In this way, the reliability and stability of stacking and connection of the multiple battery modules 100 can be improved. In some embodiments, D1 and D2 satisfies the relationship: 0.5mm≤D1-D2≤2mm.

As shown in FIG. 7, the support platform 31 may further mainly include: a mounting portion 313. One end of the mounting portion 313 is arranged at the bottom of the guide fitting portion 311, and another end extends away from the guide fitting portion 311 along an axial direction. The support column 30 is provided with a mounting hole 33. The mounting portion 313 is detachably fitted in the mounting hole 33. In this way, the mounting portion 313 is located at the bottom of the guide fitting portion 311, so that the mounting portion 313 can be connected and fixed with the mounting hole 33 on the support column 30 of one battery module 100. Moreover, the guide fitting portion 311 may be set to be protruded from a surface of the battery module 100, so that the guide fitting portion 311 can be fitted and connected with the fitting hole 32 of another battery module 100. Further, the two battery modules 100 can be stacked and connected stably and firmly, and the stacking and connection of the two battery modules 100 are made simple and convenient.

In some embodiments, the support platform 31 may further mainly include a flange portion 312. The guide fitting portion 311 is arranged on one side of the flange portion 312, the mounting portion 313 is arranged on another side of the flange portion 312, and a periphery of the flange portion 312 is protruded relative to both the guide fitting portion 311 and the mounting portion 313. In this way, the flange portion 312 can separate the mounting portion 313 from the guide fitting portion 311. Moreover, after the guide fitting portion 311 extends into the threaded hole and is connected and fitted with the threaded hole, an outer side of the threaded hole can abut against the flange portion 312. After the mounting portion 313 is connected and fitted with the mounting hole 33, an outer side of the mounting hole 33 can abut against the flange portion 312. This can prevent the battery modules 100 at two ends of the flange portion 312 from interfering with each other, thereby improving the structural reliability of the battery modules 100.

In some other embodiments, the mounting portion 313 can be directly connected to the bottom of the guide fitting portion 311 without arranging the flange portion 312 in the support platform 31, which can facilitate production and simplify the structural design of the support platform 31. It should be noted that in order to avoid instable connection and fixation between two battery modules 100 using such support platforms 31, at least two support columns 30 of the battery module 100 need to be provided with the support platforms 31, and at least two support platforms 31 are needed to realize connection and fitting with the fitting holes 32 in the support columns 30 of another battery module 100, thereby ensuring the stability of connection and fixation of the multiple battery modules 100.

It should be noted that the mounting portion 313 may be provided with an external thread, the mounting hole 33 may be provided with an internal thread, and the mounting portion 313 and the mounting hole 33 may be connected and fixed through the threads.

As shown in FIG. 3, FIG. 5, and FIG. 6, the support column 30 may mainly include: a column body 34 and an insertion portion 35. The insertion portion 35 is arranged on one side of the column body 34 near the end plate 50. An end portion of the end plate 50 is provided with an insertion hole 51. The insertion portion 35 is inserted in the insertion hole 51 and fixedly connected to the end portion of the end plate 50. Specifically, end portions of the end plate 50 near two ends of the side plate 40 are provided with the insertion holes 51, and the insertion portions 35 on the support columns 30 near the two ends of the side plate 40 are respectively inserted and fitted in the insertion holes 51 at the end portions of the end plate 50, so that one end plate 50 is mounted and arranged between two support columns 30, which thereby can improve the reliability of the outer frame 20.

In some embodiments, after the insertion portion 35 is inserted and fixed in the insertion hole 51, a fastener is used for connecting and fixing the end plate 50 to the support column 30, which can ensure the stability and firmness of connection and fixation between the end plate 50 and the support columns 30. After the mounting and fixation between the end plates 50 and the support columns 30 are completed, a cylinder-controlled tool set may be used for squeezing the end plates 50, so that the end plates 50 squeeze the multiple cells 10 in the accommodating cavity 21. In this way, the multiple cells 10 that are arranged loosely can become closer in the accommodating cavity 21, which can increase the space utilization of the battery module 100, reduce the volume of the battery module 100, and improve the reliability of the battery module 100.

In addition, in this way, the cells 10 can be arranged in the battery module 100 without arranging the cells 10 on a support and then placing the support on the battery module 100, which can simplify the assembly process and reduce the assembly and manufacturing costs.

As shown in FIG. 3, one side of the column body 34 near the side plate 40 is provided with a positioning groove 341, and a positioning rib 41 is arranged on the side plate 40. An end portion of the positioning rib 41 is fitted in the positioning groove 341 and fixedly connected to the column body 34. Specifically, first, the positioning rib 41 on the side plate 40 is positioned and fitted with the positioning groove 341 on another side of the column body 34. The positioning rib 41 is provided with a positioning hole 411, and the positioning groove 341 is provided with a positioning protrusion 3411. The positioning protrusion 3411 is positioned and fitted with the positioning hole 411, so that the side plate 40 is in a pre-positioned state. Then, the cylinder is shut off, so that the end plates 50 stops squeezing the multiple cells 10. The multiple cells 10 that are no longer squeezed can spring back. In this case, the side plate 40 can be placed to a proper position relative to the support column 30, and finally, the fastener is used to connect and fix the side plate 40 with the support column 30. This can not only realize accurate and quick mounting and arrangement between the side plate 40 and the support column 30, but also improve the stability and firmness of connection between the side plate 40 and the support column 30.

As shown in FIG. 3, the outer frame 20 may further mainly include: a bottom cover 22, a tray 23, and a top cover 24. The bottom cover 22 is arranged at a bottom of the multiple cells 10 and fixedly connected to the end plates 50 and/or the side plates 40. The bottom cover 22 can provide a surface for arranging the multiple cells 10, and can generally shape the multiple cells 10, thereby preventing the multiple cells 10 from being arranged too loosely.

In addition, in some embodiments, a lower end of the side plate 40 may be connected and fixed with the bottom cover 22 through a fastener. In some other embodiments, a lower end of the end plate 50 may be connected and fixed with the bottom cover 22 through a fastener. In some other embodiments, lower ends of both the side plate 40 and the end plate 50 may be connected and fixed with the bottom cover 22 through fasteners, which can be selectively set according to specific process needs and costs of production and manufacturing. In addition, in this way, the bottom cover 22 may also seal and fix a bottom of the accommodating cavity 21 formed by the support columns 30, the side plates 40, and the end plates 50.

In some embodiments, as shown in FIG. 3, the tray 23 is arranged at a top of the multiple batteries and provided with a connection sheet 231 for connecting the cells 10. After the tray 23 is arranged at the top of the multiple cells 10, the connection sheet 231 on the tray 23 for connecting the cells 10 may be welded and fixed with the cells 10, so that the multiple independent cells 10 are connected with each other to form a whole. Then, the tray 23 may be covered with a PC protection plate 25 for protecting the connection sheet 231. The tray 23 and the PC protection plate 25 may also be connected and fixed with the outer frame 20 through fasteners.

As shown in FIG. 3, the top cover 24 is arranged at a top of the tray 23 and fixedly connected to the end plates 50 and/or the side plates 40. Specifically, the top cover 24 may seal the accommodating cavity 21 in cooperation with the side plates 40, the end plates 50, the bottom cover 22, and the support columns 30, so that the multiple cells 10 can be separated from the outside. This can prevent the cells 10 from being damaged by the erosion of foreign objects from the outside and by the impact of external forces, thereby improving the reliability of the battery module 100. The top cover 24 may also be connected and fixed with the outer frame 20 through fasteners.

As shown in FIG. 1 to FIG. 3, the battery pack 1000 according to the embodiments of the present disclosure may mainly include: a battery module 100 described above and a power control box 200. The power control box 200 is arranged on an outer side of the outer frame 20 and detachably mounted on the outer frame 20. By mounting and arranging the power control box 200 on the outer side of the outer frame 20 of the battery module 100 and electrically connecting the power control box 200 to the battery module 100, the power control box 200 can control and adjust the battery module 100, so that the battery pack 1000 can have multiple working modes. In this way, the battery pack 1000 can better satisfy the needs in different situations.

As shown in FIG. 1 to FIG. 4, a protruded electrode lead-out end 101 and a protruded signal lead-out end 102 are arranged on an outer side of the battery module 100. The electrode lead-out end 101 and the signal lead-out end 102 are spaced apart on the battery module 100. The power control box 200 is provided with two via holes 201 that are spaced apart. The two via holes 201 are respectively an electrode lead-out end via hole 2011 and a signal lead-out end via hole 2012. After the electrode lead-out end 101 and the signal lead-out end 102 respectively penetrate through the electrode lead-out end via hole 2011 and the signal lead-out end via hole 2012, the electrode lead-out end 101 and the signal lead-out end 102 are respectively electrically connected to electrical contacts in the power control box 200, so that the battery module 100 is electrically connected to the power control box 200.

The electrode lead-out end via hole 2011 and the signal lead-out end via hole 2012 have different shapes, which can prevent the electrode lead-out end 101 and the signal lead-out end 102 from mistakenly penetrating through the via holes 201, thereby improving the reliability of the battery pack 1000.

In this way, a current and an electrical signal of the battery module 100 can be transferred into the power control box 200 continuously and stably, and the electrode lead-out end 101 and the signal lead-out end 102 can be respectively guided to contact junctions in the power control box 200. That is, as long as the electrode lead-out end 101 and the signal lead-out end 102 are inserted into the via holes 201, the electrode lead-out end 101 and the signal lead-out end 102 accurately contact the junctions in the power control box 200. This can improve the stability of connection between the battery module 100 and the power control box 200. In some embodiments, after the electrode lead-out end 101 and the signal lead-out end 102 are inserted into the two via holes 201 of the power control box 200 and electrically contact the junctions in the power control box 200, the battery module 100 may be connected and fixed with the power control box 200 stably and firmly through fasteners, which can improve the structural stability of the whole battery pack 1000.

In addition, compared with the method of guiding and positioning the electrical contact of the electrode lead-out end 101 and the signal lead-out end 102 with the corresponding junctions through bolts, this can prevent the bolts from abrasion when the bolts are inserted into bolt holes, causing rusty bolts, and also prevent the bolts from being damaged or bent during the transportation of the battery pack 1000, thereby improving the structural reliability of the battery pack 1000.

Furthermore, since the electrode lead-out end 101 and the signal lead-out end 102 contact the junctions in the power control box 200 and the battery module 100 and the power control box 200 are connected and fixed through fasteners, the battery module 100 and the power control box 200 can be disassembled and maintained conveniently, and the power control box 200 with different functions and the battery module 100 with different capacities and voltages can be configured conveniently according to actual needs, which can facilitate the production of products and response to market demands.

In the description of the present disclosure, it should be understood that orientation or position relationships indicated by the terms such as "center", "longitudinal", "transverse", "length", "width", "thickness", "on", "below", "front", "back", "left", "right", "vertical", "horizontal", "top", "bottom", "inside", "outside", "clockwise", "anticlockwise", "axial", "radial", and "circumferential" are based on orientation or position relationships shown in the accompanying drawings, and are used only for ease and brevity of illustration and description, rather than indicating or implying that the mentioned apparatus or component needs to have a particular orientation or needs to be constructed and operated in a particular orientation. Therefore, such terms should not be construed as limiting of the present disclosure.

In the description of this specification, the description of the reference terms such as "an embodiment", "some embodiments", "exemplary embodiments", "example", "specific example", or "some examples" means that the specific features, structures, materials, or characteristics described with reference to the embodiment or example are included in at least one embodiment or example of the present disclosure. In this specification, exemplary descriptions of the foregoing terms do not necessarily refer to the same embodiment or example.

Although the embodiments of the present disclosure have been shown and described, a person of ordinary skill in the art should understand that various changes, modifications, replacements, and variations may be made to the embodiments without departing from the principles and spirit of the present disclosure, and the scope of the present disclosure is as defined by the appended claims and their equivalents.

## Claims

1. A battery module, comprising:
a plurality of cells; and
an outer frame, the outer frame defining an accommodating cavity, the plurality of cells being accommodated in the accommodating cavity, the outer frame comprising four support columns, two side plates, and two end plates, the two side plates being arranged opposite to each other, the two end plates being arranged opposite to each other, the four support columns being respectively connected between end portions of the side plates and the end plates, one of a top and a bottom of the support column being provided with a support platform and another being provided with a fitting hole, and the support platform of one battery module being fittable in the fitting hole of another battery module.

2. The battery module according to claim 1, wherein the support platform comprises: a guide fitting portion, the guide fitting portion being configured in a frustum shape.

3. The battery module according to claim 2, wherein a taper angle of the guide fitting portion is α, and α satisfies a relationship: 30° ≤ α ≤ 85 ° .

4. The battery module according to claim 2 or 3, wherein the fitting hole is a threaded hole, a minor diameter of the threaded hole being D1, a bottom diameter of the guide fitting portion being D2, and D1 and D2 satisfying a relationship: 0.2 mm≤D1-D2≤5 mm.

5. The battery module according to any one of claims 2 to 4, wherein the support platform further comprises: a mounting portion, one end of the mounting portion being connected to a bottom of the guide fitting portion, another end extending away from the guide fitting portion along an axial direction, the support column being provided with a mounting hole, and the mounting portion being detachably fitted in the mounting hole.

6. The battery module according to any one of claims 1 to 5, wherein the support column comprises: a column body and an insertion portion, the insertion portion being arranged on one side of the column body, an end portion of the end plate being provided with an insertion hole, and the insertion portion being inserted in the insertion hole and fixedly connected to the end portion of the end plate.

7. The battery module according to claim 6, wherein another side of the column body is provided with a positioning groove, and a positioning rib is arranged on the side plate, an end portion of the positioning rib being fitted in the positioning groove and fixedly connected to the column body.

8. The battery module according to any one of claims 1 to 7, wherein the outer frame further comprises: a bottom cover, a tray, and a top cover, the bottom cover being arranged at a bottom of the plurality of cells and fixedly connected to the end plates and/or the side plates, the tray being arranged at a top of the plurality of cells and provided with a connection sheet for connecting the cells, and the top cover being arranged at a top of the tray and fixedly connected to the end plates and/or the side plates.

9. A battery pack, comprising:
a battery module according to any one of claims 1 to 8; and
a power control box, the power control box being arranged on an outer side of the outer frame and detachably mounted on the outer frame.

10. The battery pack according to claim 9, wherein a protruded electrode lead-out end and a protruded signal lead-out end are arranged on an outer side of the battery module, the electrode lead-out end and the signal lead-out end being spaced apart on the battery module, the power control box being provided with two via holes that are spaced apart, and the electrode lead-out end and the signal lead-out end respectively penetrating through the two via holes and being electrically connected to the power control box.
